# EUROPÄISCHE PATENTSCHRIFT

(11) **EP 3 564 471 B1**
(45) Veröffentlichungstag und Bekanntmachung des Hinweises auf die Patenterteilung: **01.11.2023**
(21) Anmeldenummer: 19168329.1
(22) Anmeldetag: 10.04.2019
(51) Int. Cl.: E05D 15/40, E05D 3/06, E05D 3/16

(54) **GELENKHEBEL FÜR EINE VORRICHTUNG ZUR BEWEGUNG EINES AN EINEM MÖBELKORPUS EINES MÖBELS AUFGENOMMENEN MÖBELTEILS**
ARTICULATED LEVER FOR A DEVICE FOR MOVING A PIECE OF FURNITURE ON A BODY OF A PIECE OF FURNITURE
LEVIER ARTICULÉ POUR UN DISPOSITIF DE DÉPLACEMENT D'UNE PARTIE DE MEUBLE LOGÉE SUR UNE PARTIE D'UN MEUBLE

(30) Priorität: 17.04.2018 DE 202018102086 U
(43) Veröffentlichungstag der Anmeldung: 06.11.2019
(73) Patentinhaber: Grass GmbH, 64354 Reinheim (DE)
(72) Erfinder: Krüdener, Boris, 63801 Kleinostheim (DE); Herper, Markus, 64367 Mühltal (DE)
(74) Vertreter: Otten, Roth, Dobler & Partner mbB Patentanwälte

(56) Entgegenhaltungen:
- EP-A2- 0 158 604
- GB-A- 2 092 220
- GB-A- 2 335 702

## Beschreibung

### Stand der Technik

Im Möbelbereich sind Führungsmittel wie Möbelscharniere oder Klappenbeschläge bekannt, um ein Möbelteil relativ zu einem Möbelkorpus bewegen zu können.

Die Führungsmittel müssen unterschiedlichen Anforderungen gerecht werden, insbesondere soll mit der Bewegungsführung ein Inneres des Möbelkorpus bzw. des bewegbaren Möbelteils zugänglich gemacht werden, um Gegenstände darin unterbringen oder daraus entnehmen zu können.

Nachteilig an bekannten Führungsmittel ist, dass sie vergleichsweise vielteilig ausgebildet und vergleichsweise kostenintensiv herzustellen sind.

Zum Stand der Technik werden die GB 2335702 A, GB 2092220 A und EP 0158604 A2 genannt.

### Aufgabe und Vorteile der Erfindung

Aufgabe der vorliegenden Erfindung ist es, einen Gelenkhebel für eine Vorrichtung zur Bewegung eines an einem Möbelkorpus eines Möbels aufgenommenen Möbelteils zu verbessern, sodass dieser und insbesondere die Vorrichtung vergleichsweise kostengünstig herstellbar ist und die Vorrichtung insbesondere vergleichsweise wenig Einzelteile aufweist.

Diese Aufgabe wird durch den unabhängigen Anspruch gelöst.

In den abhängigen Ansprüchen sind vorteilhafte und zweckmäßige Weiterbildungen der Erfindung thematisiert.

Die Erfindung geht von einem Gelenkhebel für eine Vorrichtung zur Bewegung eines an einem Möbelkorpus eines Möbels aufgenommenen Möbelteils aus.

Der Kern der Erfindung wird darin gesehen, dass der Gelenkhebel ein Distanzorgan in Form einer ersten und einer zweiten Prägung aufweist, wobei die erste Prägung auf einer ersten Seite des ersten Gelenkhebels und die zweite Prägung auf einer zweiten Seite des ersten Gelenkhebels vorhanden ist, wobei die erste und die zweite Seite des ersten Gelenkhebels sich gegenüberliegend und voneinander beabstandet vorhanden sind, wobei die erste und die zweite Prägung gegenüberliegend vorhanden sind, wobei die erste Prägung in azimutaler und/oder radialer Richtung um eine Mitte eine Erhebung und eine Vertiefung relativ zu einer verbleibenden Fläche der ersten Seite aufweist und die zweite Prägung in azimutaler und/oder radialer Richtung um eine Mitte, insbesondere um die Mitte, eine Erhebung und eine Vertiefung relativ zu einer verbleibenden Fläche der zweiten Seite aufweist.

Unter einer Prägung ist beispielsweise eine Ausbildung eines Oberflächenbereichs des Gelenkhebels verstanden, wobei die Ausbildung des Oberflächenbereichs vorteilhafterweise durch ein Prägeverfahren erzeugt ist. Die Prägung bildet zum Beispiel eine Oberflächenstruktur des Gelenkhebels. Beispielsweise können die erste und die zweite Prägung durch ein insbesondere einziges Prägeverfahren, beispielsweise einen insbesondere einzigen Prägeschritt erzeugt sein. Zum Beispiel ist die erste Prägung durch die Form eines Prägestempels vorgegeben und die zweite Prägung durch die Form einer Prägematrize. Denkbar ist auch, dass die erste Prägung und die zweite Prägung einzig durch die Form eines Prägestempels oder einer Prägematrize erzeugt ist, wobei in diesem Fall vorteilhafterweise in einem ersten Herstellungsschritt die erste Prägung erzeugt ist und in einem weiteren Herstellungsschritt die zweite Prägung. Der Gelenkhebel ist vorteilhafterweise einstückig mit der Prägung vorhanden.

Die Vorrichtung ist bevorzugterweise als ein Scharnier oder ein Beschlag, insbesondere ein Oberklappenbeschlag ausgebildet.

Als vorteilhaft erweist sich auch, dass die erste und/oder die zweite Prägung mehrere Erhebungen und/oder mehrere Vertiefungen umfasst und diese alternierend ausgebildet sind. Die Prägung ist z.B. wellenartig vorhanden. Z.B. ist eine Erhebung und/oder eine Vertiefung ringartig oder wellenartig ausgebildet. Insbesondere sind die ringartigen oder wellenartigen Erhebungen und die ringartigen oder wellenartigen Vertiefungen konzentrisch vorhanden, insbesondere konzentrisch um eine Mitte.

Die Prägung kann auch sternförmig, sonnenstrahlenartig und/oder flügelradartig vorhanden sein. Die Erhebungen und Vertiefungen sind beispielsweise kreissegmentförmig oder kreisabschnittsartig vorhanden. Vorteilhafterweise sind die kreissegmentförmigen oder kreisabschnittsartigen Erhebungen und/oder die kreissegmentförmigen oder kreisabschnittsartigen Vertiefungen konzentrisch angeordnet, z.B. konzentrisch um die Mitte vorhanden.

Vorteilhafterweise sind die Erhebungen und Vertiefungen der ersten und der zweiten Prägung konzentrisch um eine gemeinsame Mitte verlaufend ausgebildet.

Es ist erfindungsgemäß, dass der Gelenkhebel ein Anbindungsmittel in Form einer durchgehenden Öffnung aufweist, welche sich ausgehend von der ersten Seite des Gelenkhebels bis zur gegenüberliegenden zweiten Seite des Gelenkhebels erstreckt und wobei die erste und/oder die zweite Prägung um die Öffnung, insbesondere an einem Oberflächenbereich des Gelenkhebels um die Öffnung, sich erstreckend ausgebildet ist. Das Anbindungsmittel ist z.B. als eine Bohrung vorhanden, mittels welchem der Gelenkhebel beispielsweise schwenkbeweglich mit einem weiteren Element verbindbar ist. Bevorzugterweise sind die erste und die zweite Prägung des Gelenkhebels in einem Bereich um das Anbindungsmittel am Gelenkhebel vorhanden. Vorteilhafterweise ist die erste und die zweite Prägung um die Öffnung sich kreisförmig erstreckend vorhanden. Die Öffnung ist z.B. zylinderförmig ausgebildet. Beispielsweise nimmt die erste und/oder die zweite Prägung auf einer Oberfläche des Gelenkhebels einen kreisförmigen oder einen ringkreisförmigen Bereich, insbesondere Flächenbereich ein.

Weiter wird vorgeschlagen, dass der Gelenkhebel zwei, drei oder mehr Distanzorgane aufweist, welche voneinander beabstandet am Gelenkhebel ausgebildet sind. Vorteilhafterweise umfasst der Gelenkhebel genau ein Distanzorgan, genau zwei Distanzorgane oder genau drei Distanzorgane. Beispielsweise sind genau zwei oder genau drei Öffnungen am Gelenkhebel vorhanden. Vorteilhafterweise erstreckt sich jeweils eine erste und insbesondere jeweils eine zweite Prägung um eine Öffnung.

Gemäß dem erfindungsgemäßen Gelenkhebel weist die erste Prägung und/oder die zweite Prägung eine Anlagefläche auf.

Die Anlagefläche ist erfindungsgemäß derart ausgebildet, dass ein weiteres Element, z.B. ein weiterer Gelenkhebel, der Vorrichtung insbesondere flächig anliegend an der Anlagefläche anordenbar ist. Vorteilhafterweise umfasst die erste Prägung und/oder die zweite Prägung mehrere, insbesondere drei Anlageflächen zur insbesondere flächigen Anlage des weiteren Elements, sodass die erste und/oder zweite Prägung beispielsweise eine Dreipunktauflage für das weitere Element bildet.

Auch ist es von Vorteil, dass die Erhebung der ersten Prägung und/oder die Erhebung der zweiten Prägung eine Anlagefläche aufweist, insbesondere bildet.

Außerdem wird eine Vorrichtung zur Bewegung eines an einem Möbelkorpus eines Möbels aufgenommenen Möbelteils vorgeschlagen, wobei die Vorrichtung Führungsmittel aufweist, wobei bei montierter Vorrichtung am Möbel das Möbelteil mit den Führungsmitteln aus einer Schließposition relativ zum Möbelkorpus in eine Offenposition relativ zum Möbelkorpus und zurück bewegbar ist, wobei das Möbelteil in der Schließposition eine an eine Frontseite des Möbelkorpus heranbewegte Position einnimmt, wobei ein Führungsmittel als ein erster Gelenkhebel ausgebildet ist und ein weiteres Führungsmittel als ein zweiter Gelenkhebel ausgebildet ist, wobei der zweite Gelenkhebel sandwichartig mit wenigstens zwei Hebelarmen ausgebildet ist, sodass der erste Gelenkhebel zwischen den zwei Hebelarmen des zweiten Gelenkhebels beweglich aufgenommen ist, wobei der erste und der zweite Gelenkhebel an einem Anbindungsbereich durch Anbindungsmittel gelenkig miteinander verbunden sind, wobei der erste Gelenkhebel als ein Gelenkhebel nach einer der vorangegangenen genannten Ausbildungen ausgebildet ist, und wobei die Prägungen, insbesondere die erste und die zweite Prägung des ersten Gelenkhebels zwischen den Hebelarmen des zweiten Gelenkhebels angeordnet sind. Hierdurch ist eine Montage der Vorrichtung vereinfacht.

Vorteilhafterweise weist der erste Gelenkhebel am Anbindungsbereich eine Prägung auf, sodass eine verbleibende Fläche der erste Seite des ersten Gelenkhebels und/oder eine verbleibende Fläche der zweite Seite des ersten Gelenkhebels im angeordneten Zustand am zweiten Gelenkhebel durch die erste und/oder zweite Prägung beabstandet zu einer Seite des zweiten Gelenkhebels, insbesondere beabstandet zu einer Seite eines Hebelarms des zweiten Gelenkhebels, vorhanden ist. Bevorzugterweise liegt ein Hebelarm des zweiten Gelenkhebels an einer Anlagefläche einer Prägung des ersten Gelenkhebels an. Eine Prägung besitzt vorteilhafterweise eine Funktion einer Abstandsscheibe oder eines Distanzhalteelements.

Der erste und der zweite Gelenkhebel sind insbesondere schwenkbeweglich miteinander verbunden. Vorteilhafterweise sind der erste und der zweite Gelenkhebel um eine Schwenkachse relativ zueinander bewegbar. Die Erhebung der ersten Prägung ist bevorzugterweise in Richtung der Schwenkachse gegenüberliegend zur Vertiefung der zweiten Prägung vorhanden.

Überdies ist es von Vorteil, dass die Vorrichtung ein Nietorgan umfasst, wobei das Nietorgan eine Zylinderform aufweist, welche in einem mittleren Bereich einen größeren Durchmesser besitzt als ein weiterer Durchmesser in einem Bereich eines ersten Endes des Nietorgans und als ein weiterer Durchmesser in einem Bereich eines zweiten Endes des Nietorgans. Hierdurch ist eine Montage der Vorrichtung erleichtert.

Beispielsweise ist der mittlere Bereich des Nietorgans zylinderförmig ausgebildet. Zum Beispiel ist das erste Ende und das zweite Ende des Nietorgans zylinderförmig ausgebildet. Denkbar ist, dass ein Durchmesser des zylinderförmigen ersten Endes des Nietorgans zumindest annähernd identisch ist mit einem Durchmesser des zylinderförmigen zweiten Endes des Nietorgans.

Zum Beispiel besteht das Nietorgan aus drei Zylinderelementen, welche an Stirnseiten der Zylinderelemente aneinander anliegend miteinander einstückig ausgebildet sind, wobei zwei Zylinderelemente einen kleineren Durchmesser aufweisen, als ein drittes Zylinderelement. Vorteilhafterweise bildet das dritte Zylinderelement den mittleren Bereich des Nietorgans. Bevorzugterweise erstreckt sich der mittlere Bereich entlang einer Zylinderachse des dritten Zylinderelements insbesondere vollständig über eine Länge des dritten Zylinderelements. Das Anlageorgan ist vorteilhafterweise Teil einer Stirnseite des dritten Zylinderelements.

Von Vorteil erweist sich auch, dass das Nietorgan als ein Vollniet ausgebildet ist. Das Nietorgan ist beispielsweise aus einem Vollmaterial gebildet und besitzt vorteilhafterweise keinen Hohlraum.

Außerdem wird vorgeschlagen, dass das Nietorgan derart vorhanden ist, dass im angeordneten Zustand des Nietorgans an der Vorrichtung, insbesondere an der Öffnung des ersten Gelenkhebels das Nietorgan die Öffnung durchgreift und mit seinem mittleren Bereich im Bereich der Öffnung angeordnet ist, wobei das Nietorgan sich mit dem ersten Ende über die erste Seite des ersten Gelenkhebels und mit dem zweiten Ende über die zweite Seite des ersten Gelenkhebels hinaus erstreckt, wobei der mittlere Bereich des Nietorgans entlang einer Zylinderachse des Nietorgans länger ist, als eine Breite des ersten Gelenkhebels, wobei die Breite sich insbesondere zumindest von der verbleibenden Fläche der ersten Seite bis zur verbleibenden Fläche der zweiten Seite des ersten Gelenkhebels erstreckt, sodass eine Stirnseite des mittleren Bereichs ein Anlageorgan für den zweiten Gelenkhebel bildet. Beispielsweise erstreckt sich die Breite des ersten Gelenkhebels von einer Anlagefläche der ersten Prägung des ersten Gelenkhebels bis zu einer Anlagefläche der zweiten Prägung des ersten Gelenkhebels.

Vorteilhafterweise ist eine Länge des mittleren Bereichs des Nietorgans annährend gleich, insbesondere genau gleich mit einer Breite des ersten Gelenkhebels, wobei die Breite des ersten Gelenkhebels sich von einer Anlagefläche der ersten Prägung des ersten Gelenkhebels bis zu einer Anlagefläche der zweiten Prägung des ersten Gelenkhebels erstreckt.

Vorteilhafterweise ist der mittlere Bereich des Nietorgans abgesetzt oder abgestuft zu den verbleibenden Bereichen des Nietorgans ausgebildet.

Das Anlageorgan ist beispielsweise als eine Anlagefläche vorhanden. Das Anlageorgan ist beispielsweise ringförmig, z.B. als eine Kreis-Ringfläche, ausgebildet.

Vorteilhafterweise ist das Nietorgan derart vorhanden, dass sich der mittlere Bereich des Nietorgans entlang einer Zylinderachse des Nietorgans im angeordneten Zustand von einer Anlagefläche einer Erhebung der ersten Prägung bis zu einer Anlagefläche einer Erhebung der zweiten Prägung erstreckt.

Der mittlere Bereich des Nietorgans erstreckt sich vorteilhafterweise von einem ersten Anlageorgan zu einem weiteren Anlageorgan des Nietorgans, wobei das erste Anlageorgan vorteilhafterweise im Bereich des ersten Endes des Nietorgans vorhanden ist und das zweite Anlageorgan im Bereich des zweiten Endes des Nietorgans.

Überdies wird ein Möbel mit einem Gelenkhebel nach einem der vorangegangenen genannten Varianten und/oder einer Vorrichtung nach einer der vorangegangen genannten Ausführungen vorgeschlagen.

### Beschreibung eines Ausführungsbeispiels

Weitere Merkmale und Vorteile der Erfindung sind anhand der in den Figuren schematisch dargestellten Ausführungsbeispiele näher erläutert.

Im Einzelnen zeigen:
- Fig. 1: eine perspektivische Ansicht auf ein erfindungsgemäßes Möbel mit einer erfindungsgemäßen Vorrichtung zur Bewegung eines geöffnet dargestellten Möbelteils,
- Fig. 2: den in Fig. 1 umrandeten Bereich A in vergrößerter Darstellung,
- Fig. 3: eine Seitenansicht auf Führungsmittel der Vorrichtung,
- Fig. 4: eine Seitenansicht auf die Führungsmittel aus Fig. 3, wobei Teile der Führungsmittel transparent dargestellt sind,
- Fig. 5: eine Detailansicht B der Führungsmittel gemäß Fig. 4,
- Fig. 6: eine Draufsicht auf einen erfindungsgemäßen Gelenkhebel,
- Fig. 7: eine Detailansicht eines Details C des Gelenkhebels gemäß Fig. 6,
- Fig. 8: eine Seitenansicht des Gelenkhebels gemäß Fig. 6,
- Fig. 9: eine perspektivische Ansicht eines weiteren Gelenkhebels,
- Fig. 10: eine Seitenansicht auf Führungsmittel mit einer weiteren Ausbildung von Gelenkhebeln, wobei Teile der Gelenkhebel transparent dargestellt sind,
- Fig. 11: eine Detailansicht D eines Gelenkhebels der Führungsmittel gemäß Fig. 10
- Fig. 12: eine Seitenansicht auf den Gelenkhebel der Führungsmittel gemäß den Figuren 10 und 11,
- Fig. 13: eine Draufsicht auf den Gelenkhebel gemäß Fig. 12,
- Fig. 14: eine Detailansicht E des Gelenkhebels gemäß Fig. 13,
- Fig. 15: eine Draufsicht auf Führungsmittel in einer weiteren Ausbildung,
- Fig. 16: eine Schnittansicht der Führungsmittel gemäß Fig. 15,
- Fig. 17: eine Detailansicht F des Schnitts gemäß Fig. 16.

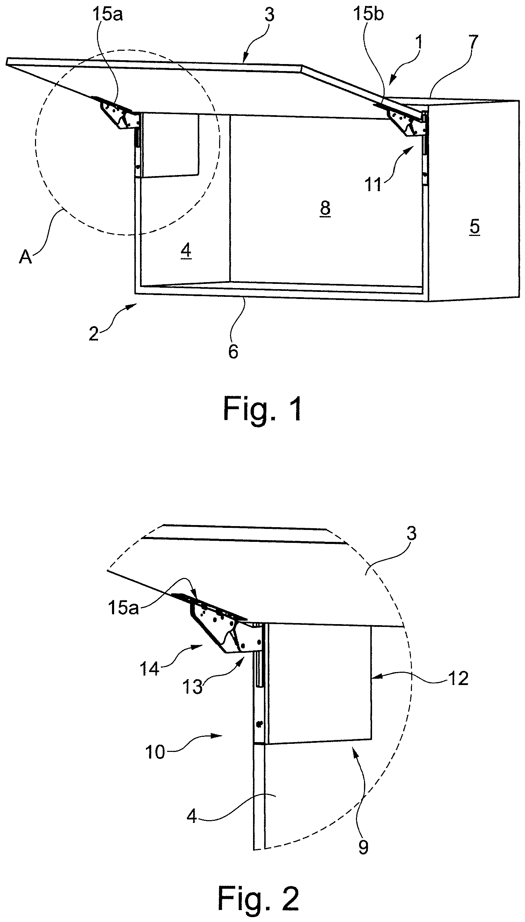

Fig. 1 zeigt perspektivisch ein erfindungsgemäßes Möbel bzw. einen Oberschrank 1 mit einem kastenförmigen Möbelkorpus 2 und einem daran aufgenommenen Möbelteil, das als eine plattenartige Oberklappe 3 ausgebildet ist, welche in einer Offenstellung relativ zum Möbelkorpus 2 gezeigt ist.

Der Möbelkorpus 2 umfasst zwei gegenüberliegende, aufrechte Seitenwände 4 und 5, die unten mit einem Unterboden 6 und oben mit einem Oberboden 7 verbunden sind. Rückseitig ist der Möbelkorpus 2 von einer Rückwand 8 verschlossen.

Zur Bewegung der Oberklappe 3 um eine horizontale Schwenkachse relativ zum Möbelkorpus 2 aus der in Fig. 1 gezeigten Offenstellung in eine zum Möbelkorpus 2 frontseitig heranbewegte Schließstellung (nicht gezeigt) ist eine erfindungsgemäße Bewegungsvorrichtung vorhanden, die als Oberklappenbeschlag 9 ausgestaltet ist. Der Oberklappenbeschlag 9 weist an der Seitenwand 4 eine erste Beschlageinheit 10 und an der Seitenwand 5 eine zweite Beschlageinheit 11 auf, die gleichartig aber zur funktionsrichtigen Anordnung an der jeweiligen Seitenwand 4 bzw. 5 seitenbezogen aufgebaut sind.

Jede Beschlageinheit 10 und 11 umfasst eine Basiseinheit 12, Führungsmittel 13 mit Gelenkhebeln und eine Montageeinheit in Form eine Montageplatte 15a, 15b. Über mehrere gelenkig gelagerte Gelenkhebel, welche als Schwenk- oder Hebelarme einer Schwenkarm-Anordnung 14 vorhanden sind, ist die Basiseinheit 12 mit der Montageplatte 15a, 15b verbunden, welche fest an einer Innenseite der Oberklappe 3 z.B. versenkt in einer Materialausnehmung befestigt ist.

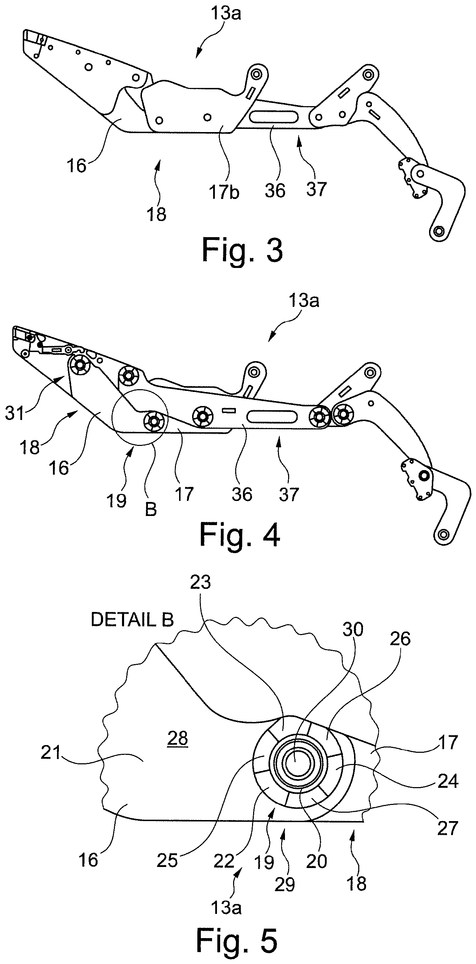

In Figur 3 und 4 ist eine Seitenansicht von Führungsmitteln 13a in einer ersten Ausbildungsvariante dargestellt, wobei in Figur 4 Teile der Führungsmittel 13a transparent gehalten sind.

In Figur 5 ist eine Detailansicht B der Führungsmittel 13a dargestellt. In Figur 5 gezeigt ist ein Gelenkhebel 16 und ein Hebelarm 17a eines sandwichartig ausgebildeten weiteren Gelenkhebels 18. Der Gelenkhebel 18 umfasst zwei Hebelarme 17a, 17b. Der Gelenkhebel 16 umfasst einen einzigen Hebelarm und ist im angeordneten Zustand zwischen den Hebelarmen 17a, 17b des Gelenkhebels 18 vorhanden. Am Gelenkhebel 16 ist an einem Anbindungsbereich 19 ein Anbindungsmittel in Form einer Öffnung 20 ausgebildet. Um die Öffnung 20 erstreckt sich auf einer ersten Seite 21 des Gelenkhebels 16 in radialer Richtung eine erste Prägung 29 in Form von Erhebungen 22 bis 24 und Vertiefungen 25 bis 27. Die Erhebungen 22 - 24 und Vertiefungen 25 - 27 sind vorteilhafterweise kreissegmentartig vorhanden. Die Erhebungen 22 - 24 und Vertiefungen 25 - 27 sind vorteilhafterweise in der Bildebene versetzt zu einer verbleibenden Oberfläche 28 der ersten Seite 21 ausgebildet. In der Öffnung 20 ist außerdem ein Nietorgan 30 gezeigt. Vorteilhafterweise umfasst der Gelenkhebel 16 zwei Anbindungsbereiche 19, 31.

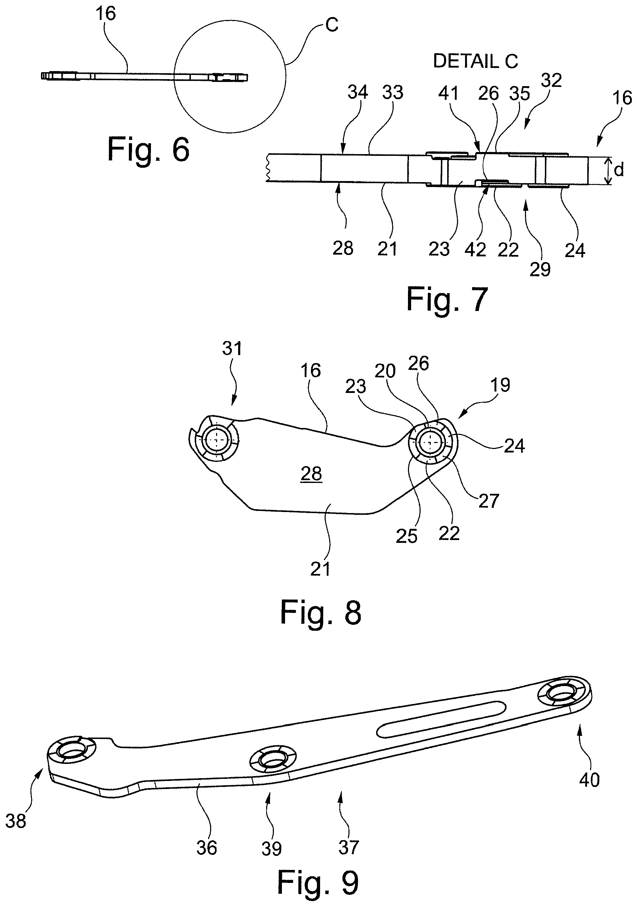

In der Detailansicht C (Figur 7) des Gelenkhebels 16 sind die erste Prägung 29 und eine zweite Prägung 32 gezeigt. Die Prägung 32 befindet sich am Anbindungsbereich 19 auf einer zweiten Seite 33 gegenüberliegend zur ersten Prägung 29, wobei Teile der zweiten Prägung 32 erhaben oder vertieft zu einer verbleibenden Oberfläche 34 der zweiten Seite 33 des Gelenkhebels 16 ausgebildet sind. Eine Vertiefung 26 der ersten Prägung 29 ist vorteilhafterweise gegenüberliegend zu einer Erhebung 35 der zweiten Prägung 32 ausgebildet. Eine Dicke oder Breite d des Gelenkhebels 16 ist vorteilhafterweise durch einen Abstand der verbleibenden Oberfläche 28 der ersten Seite 21 zur verbleibenden Oberfläche 34 der zweiten Seite 33 des Gelenkhebels 16 gebildet. Ein Abstand einer Oberfläche 41 der Erhebung 35 der zweiten Prägung 32 zu einer Oberfläche 42 der Vertiefung 26 der ersten Prägung 29 oder umgekehrt ist vorteilhafterweise gleich der Breite d des Gelenkhebels 16.

In Figur 9 ist ein Hebelarm 36 eines weiteren Gelenkhebels 37 der Führungsmittel 13a dargestellt. Der Hebelarm 36 umfasst vorteilhafterweise drei Anbindungsbereiche 38 - 40. Die Gelenkhebel 18, 37, welche insbesondere einen einzigen Hebelarm aufweisen sind im angeordneten Zustand an den Führungsmitteln 13a vorteilhafterweise in einer Ebene nebeneinander angeordnet (siehe Figur 4).

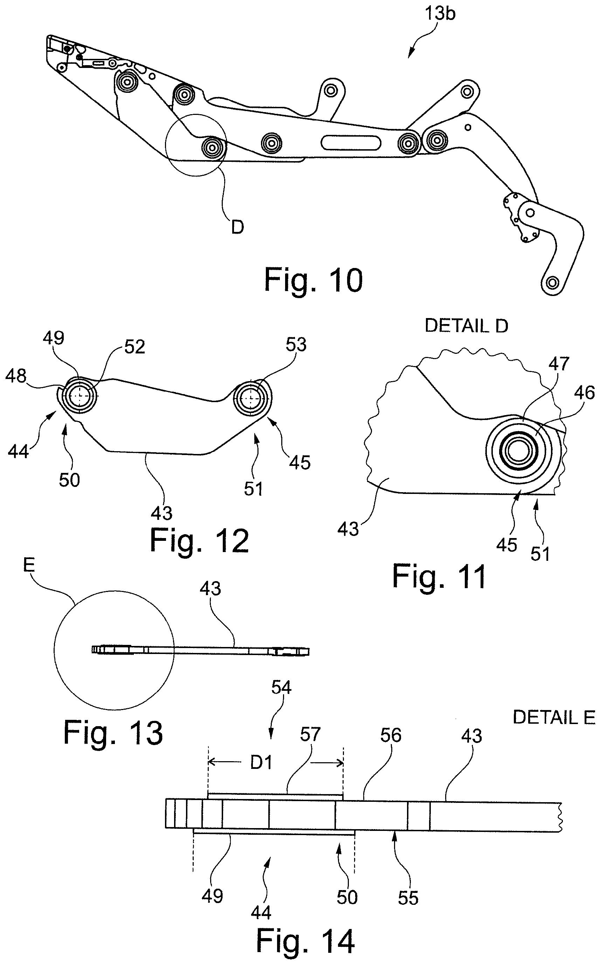

Die Figuren 10 bis 14 zeigen Führungsmittel 13b mit einer weiteren Variante von Prägungen. In den Figuren 10 bis 14 ist ein Gelenkhebel 43 mit zwei Anbindungsbereichen 44, 45 gezeigt. Die Prägungen 50, 51 der Anbindungsbereiche 44, 45 weisen kreisförmige Erhebungen 47, 49 und Vertiefungen 46, 48 auf. Die Erhebung und Vertiefung einer Prägung 50, 51 sind in radialer Richtung um eine Öffnung 52, 53 eines Anbindungsbereichs 44, 45 gesehen abwechselnd verlaufend ausgebildet. Ein Anbindungsbereich 44 umfasst vorteilhafterweise zwei Prägungen 50, 54, wobei eine erste Prägung 50 auf einer ersten Seite 55 und eine zweite Prägung 54 auf einer zweiten Seite 56 des Gelenkhebels 43 sich gegenüberliegend angeordnet sind. In der Variante gemäß den Figuren 10 bis 14 besitzt eine Erhebung 49 der ersten Prägung 50 zu einer Erhebung 57 der zweiten Prägung 54 des Anbindungsbereichs 44 verschiedene Kreisflächen.

Beispielsweise ist ein Außendurchmesser D1 der Erhebung 57 der zweiten Prägung 54 gleich einem Innendurchmesser der Erhebung 49 der ersten Prägung 50. Ein Außendurchmesser D2 der Erhebung 49 der ersten Prägung 50 ist beispielsweise größer als der Außendurchmesser D1 der Erhebung 57 der zweiten Prägungen 54. Entsprechend Umgekehrtes gilt beispielsweise für die Vertiefungen der Prägungen 50, 54.

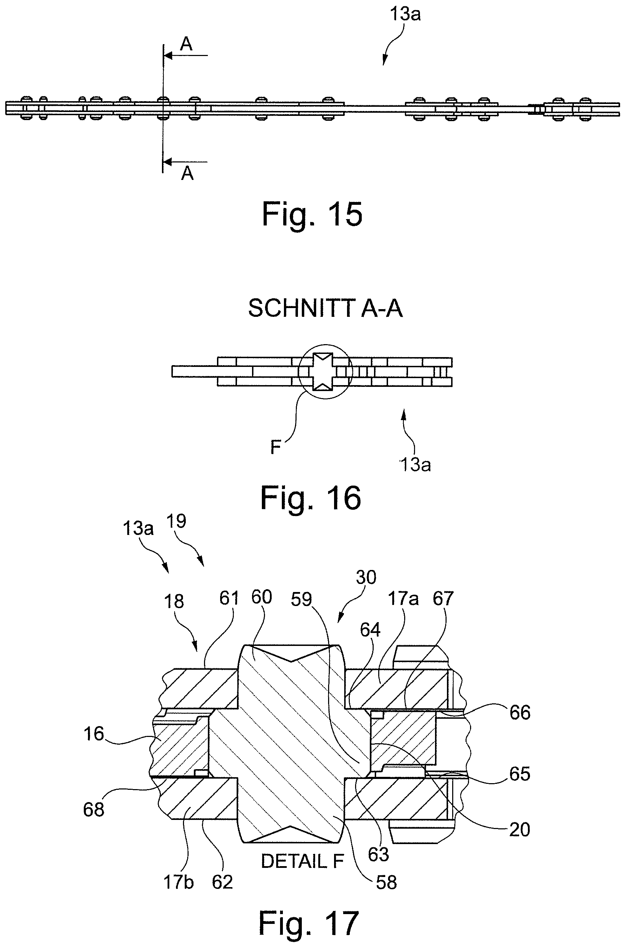

In Figur 17 ist eine Schnittansicht durch den Anbindungsbereich 19 der Führungsmittel 13a gezeigt. Gezeigt ist der Gelenkhebel 16, die Hebelarme 17a, 17b des Gelenkhebels 18 und das Nietorgan 30. Das Nietorgan 30 besteht aus drei zylinderförmigen Elementen 58 - 60, welche einstückig miteinander ausgebildet sind. Das mittlere Element 59 des Nietorgans 30 besitzt einen größeren Außendurchmesser als die beiden äußeren Elemente 58, 59. Das Nietorgan 30 ist vorteilhafterweise derart ausgebildet, dass es mit dem mittleren Element 59 vorteilhafterweise passgenau in die Öffnung 20 des Gelenkhebels 16 einsetzbar ist.

Stirnseiten des mittleren Elements 59 bilden vorteilhafterweise Anlageflächen 63, 64 für innere Oberflächen 65, 66 der Hebelarme 17a, 17b des Gelenkhebels 18. Im angeordneten Zustand sind die Hebelarme 17a, 17b vorteilhafterweise beweglich an den Anlageflächen 63, 64 des mittleren Elements 59 gelagert. Außerdem sind die inneren Oberflächen 65, 66 der Hebelarme 17a, 17b des Gelenkhebels 18 bevorzugterweise an Anlageflächen 67, 68 von Erhebungen der Prägungen 29, 32 des Gelenkhebels 16 im angeordneten Zustand beweglich gelagert. Die Erhebungen der Prägungen 29, 32 des Gelenkhebels 16 bilden mit den Anlageflächen 63, 64 des Nietorgans 30 vorteilhafterweise Anlageebenen oder Lagerebenen für die inneren Oberflächen 65, 66 der Hebelarme 17a, 17b des Gelenkhebels 18.

Im angeordneten Zustand erstrecken sich die äußeren Elemente 58, 59 vorteilhafterweise über eine äußere Oberfläche 61, 62 der Hebelarme 17a, 17b. Hierdurch sind die äußeren Elemente 58, 59 des Nietorgans 30 z.B. mittels eines Taumlers taumelbar, insbesondere verformbar, sodass das Nietorgan 30 die Gelenkhebel 16, 18 nach dem Taumeln oder Verformen miteinander insbesondere beweglich und unlösbar verbindet.

**Bezugszeichenliste**

| | | | |
|---|---|---|---|
| 1 | Oberschrank | 29 | Prägung |
| 2 | Möbelkorpus | 30 | Nietorgan |
| 3 | Oberklappe | 31 | Anbindungsbereich |
| 4 | Seitenwand | 33 | Seite |
| 5 | Seitenwand | 32 | Prägung |
| 6 | Unterboden | 34 | Oberfläche |
| 7 | Oberboden | 35 | Erhebung |
| 8 | Rückwand | 36 | Hebelarm |
| 9 | Oberklappenbeschlag | 37 | Gelenkhebel |
| 10 | Beschlageinheit | 38 - 40 | Anbindungsbereich |
| 11 | Beschlageinheit | 41 | Oberfläche |
| 12 | Basiseinheit | 42 | Oberfläche |
| 13 | Führungsmittel | 43 | Gelenkhebel |
| 13a, 13b | Führungsmittel | 44, 45 | Anbindungsbereich |
| 14 | Schwenkarm-Anordnung | 46, 48 | Vertiefung |
| | | 47, 49 | Erhebung |
| 15a, 15b | Montageplatte | 50, 51 | Prägung |
| 16 | Gelenkhebel | 52, 53 | Öffnung |
| 17a, 17b | Hebelarm | 54 | Prägung |
| 18 | Gelenkhebel | 55, 56 | Seite |
| 19 | Anbindungsbereich | 57 | Erhebung |
| 20 | Öffnung | 58 - 60 | Element |
| 21 | Seite | 61, 62 | Oberfläche |
| 22 - 24 | Erhebung | 63, 64 | Anlagefläche |
| 25 - 27 | Vertiefung | 65, 66 | Oberfläche |
| 28 | Oberfläche | 67, 68 | Anlagefläche |

## Patentansprüche

1. Gelenkhebel (16) für eine Vorrichtung (9) zur Bewegung eines an einem Möbelkorpus (2) eines Möbels (1) aufgenommenen Möbelteils (3),
wobei
der Gelenkhebel (16) ein Distanzorgan in Form einer ersten und einer zweiten Prägung (29, 32) aufweist, wobei die erste Prägung (29) auf einer ersten Seite (21) des ersten Gelenkhebels (16) und die zweite Prägung (32) auf einer zweiten Seite (33) des ersten Gelenkhebels (16) vorhanden ist, wobei die erste und die zweite Seite (21, 33) des ersten Gelenkhebels (16) sich gegenüberliegend und voneinander beabstandet vorhanden sind, wobei die erste und die zweite Prägung (29, 32) gegenüberliegend vorhanden sind, **dadurch gekennzeichnet, dass** die erste Prägung (29) in azimutaler und/oder radialer Richtung um eine Mitte eine Erhebung (22 - 24) und eine Vertiefung (25 - 27) relativ zu einer verbleibenden Fläche (28) der ersten Seite aufweist (21) und die zweite Prägung (32) in azimutaler und/oder radialer Richtung um eine Mitte eine Erhebung (35) und eine Vertiefung relativ zu einer verbleibenden Fläche (34) der zweiten Seite (33) aufweist, wobei der Gelenkhebel (16) ein Anbindungsmittel in Form einer durchgehenden Öffnung (20) aufweist, welche sich ausgehend von der ersten Seite (21) des Gelenkhebels (16) bis zur gegenüberliegenden zweiten Seite (33) des Gelenkhebels (16) erstreckt und wobei die erste und/oder die zweite Prägung (29, 32) sich um die Öffnung (20) erstreckend ausgebildet ist, wobei die erste Prägung und/oder die zweite Prägung (29, 32) eine Anlagefläche (35) aufweist, wobei die Anlagefläche derart ausgebildet ist, dass ein weiteres Element der Vorrichtung insbesondere flächig anliegend an der Anlagefläche anordenbar ist.

2. Gelenkhebel (16) für eine Vorrichtung (9) zur Bewegung eines an einem Möbelkorpus (2) eines Möbels (1) aufgenommenen Möbelteils (3) nach dem Anspruch 1, **dadurch gekennzeichnet, dass** die erste und/oder die zweite Prägung (29, 32) mehrere Erhebungen und/oder mehrere Vertiefungen umfasst und diese alternierend ausgebildet sind.

3. Gelenkhebel (16) für eine Vorrichtung (9) zur Bewegung eines an einem Möbelkorpus (2) eines Möbels (1) aufgenommenen Möbelteils (3) nach einem der vorangegangenen Ansprüche, **dadurch gekennzeichnet, dass** der Gelenkhebel (16) zwei, drei oder mehr Distanzorgane (19, 31) aufweist, welche voneinander beabstandet am Gelenkhebel (16) ausgebildet sind.

4. Gelenkhebel (16) für eine Vorrichtung (9) zur Bewegung eines an einem Möbelkorpus (2) eines Möbels (1) aufgenommenen Möbelteils (3) nach einem der vorangegangenen Ansprüche, **dadurch gekennzeichnet, dass** die Erhebung (22 - 24) der ersten Prägung (29) und/oder die Erhebung (35) der zweiten Prägung (32) die Anlagefläche aufweist.

5. Vorrichtung (9) zur Bewegung eines an einem Möbelkorpus (2) eines Möbels (1) aufgenommenen Möbelteils (3), wobei die Vorrichtung (9) Führungsmittel (13) aufweist, wobei bei montierter Vorrichtung (9) am Möbel (1) das Möbelteil (3) mit den Führungsmitteln (13) aus einer Schließposition relativ zum Möbelkorpus (2) in eine Offenposition relativ zum Möbelkorpus (2) und zurück bewegbar ist, wobei das Möbelteil (3) in der Schließposition eine an eine Frontseite (4b) des Möbelkorpus (2) heranbewegte Position einnimmt, wobei ein Führungsmittel (13) als ein erster Gelenkhebel (16) ausgebildet ist und ein weiteres Führungsmittel als ein zweiter Gelenkhebel (18) ausgebildet ist, wobei der zweite Gelenkhebel (18) sandwichartig mit wenigstens zwei Hebelarmen (17a, 17b) ausgebildet ist, sodass der erste Gelenkhebel (16) zwischen den zwei Hebelarmen (17a, 17b) des zweiten Gelenkhebels (18) beweglich aufgenommen ist, wobei der erste und der zweite Gelenkhebel (16, 18) an einem Anbindungsbereich (19) durch Anbindungsmittel gelenkig miteinander verbunden sind, **dadurch gekennzeichnet, dass**
der erste Gelenkhebel (16) als ein Gelenkhebel nach einem der vorangegangenen Ansprüche ausgebildet ist, und wobei die Prägungen (29, 32) des ersten Gelenkhebels (16) zwischen den Hebelarmen (17a, 17b) des zweiten Gelenkhebels (18) angeordnet sind.

6. Vorrichtung (9) zur Bewegung eines an einem Möbelkorpus (2) eines Möbels (1) aufgenommenen Möbelteils (3) nach Anspruch 5, **dadurch gekennzeichnet, dass**
die Vorrichtung (9) ein Nietorgan (30) umfasst, wobei das Nietorgan (30) eine Zylinderform aufweist, welche in einem mittleren Bereich (59) einen größeren Durchmesser besitzt als in einem Bereich eines ersten Endes des Nietorgans (30) und als in einem Bereich eines zweiten Endes des Nietorgans (30).

7. Vorrichtung (9) zur Bewegung eines an einem Möbelkorpus (2) eines Möbels (1) aufgenommenen Möbelteils (3) nach dem vorangegangenen Anspruch 6, **dadurch gekennzeichnet, dass** das Nietorgan (30) als ein Vollniet ausgebildet ist.

8. Vorrichtung (9) zur Bewegung eines an einem Möbelkorpus (2) eines Möbels (1) aufgenommenen Möbelteils (3) nach dem vorangegangenen Anspruch 6 bis 7, **dadurch gekennzeichnet, dass** das Nietorgan (30) derart vorhanden ist, dass im angeordneten Zustand des Nietorgans (30) an der Öffnung (20) des ersten Gelenkhebels (16) das Nietorgan (30) die Öffnung (20) durchgreift und mit seinem mittleren Bereich (59) im Bereich der Öffnung (20) angeordnet ist, wobei das Nietorgan (30) sich mit dem ersten Ende (58) über die erste Seite (21, 28) des ersten Gelenkhebels (16) und mit dem zweiten Ende (60) über die zweite Seite (33, 34) des ersten Gelenkhebels (16) hinaus erstreckt, wobei der mittlere Bereich (59) des Nietorgans (30) entlang einer Zylinderachse des Nietorgans (30) länger ist, als eine Breite des ersten Gelenkhebels (16), wobei die Breite sich von der verbleibenden Fläche (258) der ersten Seite (21) bis zur verbleibenden Fläche (34) der zweiten Seite (33) des ersten Gelenkhebels (16) erstreckt, sodass eine Stirnseite (63, 64) des mittleren Bereichs (59) ein Anlageorgan (65, 66) für den zweiten Gelenkhebel (18) bildet.

9. Vorrichtung (9) zur Bewegung eines an einem Möbelkorpus (2) eines Möbels (1) aufgenommenen Möbelteils (3) nach dem vorangegangenen Anspruch 6 bis 8, **dadurch gekennzeichnet, dass** das Nietorgan (30) derart vorhanden ist, dass sich der mittlere Bereich (59) des Nietorgans (30) entlang einer Zylinderachse des Nietorgans (30) im angeordneten Zustand von einer Anlagefläche (68) einer Erhebung der ersten Prägung (28) bis zu einer Anlagefläche (67) einer Erhebung der zweiten Prägung (32) erstreckt.

10. Möbel (1) mit einem Gelenkhebel (16) nach einem der vorangegangenen Ansprüche 1 bis 4 oder einer Vorrichtung (9) nach einem der vorangegangenen Ansprüche 5 bis 9.

## Claims

1. Articulated lever (16) for a device (9) for moving a furniture part (3) received on a furniture carcass (2) of an item of furniture (1), wherein the articulated lever (16) has a spacer member in the form of a first and a second embossing (29, 32), wherein the first embossing (29) is present on a first side (21) of the first articulated lever (16), and the second embossing (32) is present on a second side (33) of the first articulated lever (16), wherein the first and the second side (21, 33) of the first articulated lever (16) are present opposite one another and spaced apart from one another, wherein the first and the second embossing (29, 32) are present opposite one another, **characterized in that** the first embossing (29) has in the azimuthal and/or radial direction, about a centre, an elevation (22-24) and a depression (25-27) relative to a remaining surface (28) of the first side (21), and the second embossing (32) has in the azimuthal and/or radial direction, about a centre, an elevation (35) and a depression relative to a remaining surface (34) of the second side (33), wherein the articulated lever (16) has an attachment means in the form of a through-opening (20) which extends starting from the first side (21) of the articulated lever (16) to the opposite second side (33) of the articulated lever (16), and wherein the first and/or the second embossing (29, 32) are or is formed to extend about the opening (20), wherein the first embossing and/or the second embossing (29, 32) have or has a bearing surface (35), wherein the bearing surface is formed in such a way that a further element of the device can be arranged in particular to bear flat against the bearing surface.

2. Articulated lever (16) for a device (9) for moving a furniture part (3) received on a furniture carcass (2) of an item of furniture (1) according to Claim 1, **characterized in that** the first and/or the second embossing (29, 32) comprise or comprises a plurality of elevations and/or a plurality of depressions, and these elevations and depressions are formed in an alternating manner.

3. Articulated lever (16) for a device (9) for moving a furniture part (3) received on a furniture carcass (2) of an item of furniture (1) according to one of the preceding claims, **characterized in that** the articulated lever (16) has two, three or more spacer members (19, 31) which are formed on the articulated lever (16) so as to be spaced apart from one another.

4. Articulated lever (16) for a device (9) for moving a furniture part (3) received on a furniture carcass (2) of an item of furniture (1) according to one of the preceding claims, **characterized in that** the elevation (22-24) of the first embossing (29) and/or the elevation (35) of the second embossing (32) have or has the bearing surface.

5. Device (9) for moving a furniture part (3) received on a furniture carcass (2) of an item of furniture (1), wherein the device (9) has guide means (13), wherein, with the device (9) mounted on the item of furniture (1), the furniture part (3) can be moved from a closed position relative to the furniture carcass (2) into an open position relative to the furniture carcass (2) and back by way of the guide means (13), wherein, in the closed position, the furniture part (3) assumes a position in which it is moved up to a front side (4b) of the furniture carcass (2), wherein one guide means (13) is formed as a first articulated lever (16), and a further guide means is formed as a second articulated lever (18), wherein the second articulated lever (18) is formed in a sandwich-like manner with at least two lever arms (17a, 17b), with the result that the first articulated lever (16) is received so as to be movable between the two lever arms (17a, 17b) of the second articulated lever (18), wherein the first and the second articulated lever (16, 18) are articulately connected to one another at an attachment region (19) by attachment means, **characterized in that** the first articulated lever (16) is formed as an articulated lever according to one of the preceding claims, and wherein the embossings (29, 32) of the first articulated lever (16) are arranged between the lever arms (17a, 17b) of the second articulated lever (18).

6. Device (9) for moving a furniture part (3) received on a furniture carcass (2) of an item of furniture (1) according to Claim 5, **characterized in that** the device (9) comprises a rivet member (30), wherein the rivet member (30) has a cylinder shape which has a larger diameter in a central region (59) than in a region of a first end of the rivet member (30) and than in a region of a second end of the rivet member (30) .

7. Device (9) for moving a furniture part (3) received on a furniture carcass (2) of an item of furniture (1) according to the preceding Claim 6, **characterized in that** the rivet member (30) is formed as a solid rivet.

8. Device (9) for moving a furniture part (3) received on a furniture carcass (2) of an item of furniture (1) according to either of the preceding Claims 6 and 7, **characterized in that** the rivet member (30) is present in such a way that, in the arranged state of the rivet member (30) on the opening (20) of the first articulated lever (16), the rivet member (30) engages through the opening (20) and has its central region (59) arranged in the region of the opening (20), wherein the rivet member (30) extends by the first end (58) beyond the first side (21, 28) of the first articulated lever (16) and by the second end (60) beyond the second side (33, 34) of the first articulated lever (16), wherein the central region (59) of the rivet member (30) is longer along a cylinder axis of the rivet member (30) than a width of the first articulated lever (16), wherein the width extends from the remaining surface (28) of the first side (21) to the remaining surface (34) of the second side (33) of the first articulated lever (16), with the result that an end face (63, 64) of the central region (59) forms a bearing member (65, 66) for the second articulated lever (18).

9. Device (9) for moving a furniture part (3) received on a furniture carcass (2) of an item of furniture (1) according to the preceding Claims 6 to 8, **characterized in that** the rivet member (30) is present in such a way that the central region (59) of the rivet member (30) extends along a cylinder axis of the rivet member (30) in the arranged state from a bearing surface (68) of an elevation of the first embossing (28) to a bearing surface (67) of an elevation of the second embossing (32).

10. Item of furniture (1) having an articulated lever (16) according to one of the preceding Claims 1 to 4 or having a device (9) according to one of the preceding Claims 5 to 9.

## Revendications

1. Levier articulé (16) pour un dispositif (9) destiné à déplacer une partie de meuble (3) montée sur un corps de meuble (2) d'un meuble (1),
le levier articulé (16) présentant un organe d'écartement sous la forme d'une première et d'une deuxième empreintes (29, 32), la première empreinte (29) étant présente sur un premier côté (21) du premier levier articulé (16) et la deuxième empreinte (32) étant présente sur un deuxième côté (33) du premier levier articulé (16), le premier et le deuxième côté (21, 33) du premier levier articulé (16) étant opposés et espacés l'un de l'autre, la première et la deuxième empreinte (29, 32) sont opposées l'une à l'autre, **caractérisé en ce que** la première empreinte (29) présente, dans la direction azimutale et/ou radiale autour d'un centre, un relief (22-24) et un creux (25-27) par rapport à une surface restante (28) du premier côté (21) et la deuxième empreinte (32) présente, dans la direction azimutale et/ou radiale autour d'un centre, un relief (35) et un creux par rapport à une surface restante (34) du deuxième côté (33), le levier articulé (16) présentant un moyen d'attache sous la forme d'une ouverture continue (20) qui s'étend depuis le premier côté (21) du levier articulé (16) jusqu'au deuxième côté opposé (33) du levier articulé (16), et la première et/ou la deuxième empreinte (29, 32) s'étendant autour de l'ouverture (20), la première empreinte et/ou la deuxième empreinte (29, 32) présentant une surface d'appui (35), la surface d'appui étant conçue de telle sorte qu'un autre élément du dispositif est apte à être agencé, en particulier en appui plan, sur la surface d'appui.

2. Levier articulé (16) pour un dispositif (9) destiné à déplacer une partie de meuble (3) montée sur un corps de meuble (2) d'un meuble (1) selon la revendication 1, **caractérisé en ce que** la première et/ou la deuxième empreinte (29, 32) comprend plusieurs reliefs et/ou plusieurs creux et **en ce que** ceux-ci sont réalisés de manière alternée.

3. Levier articulé (16) pour un dispositif (9) de déplacement d'une partie de meuble (3) montée sur un corps de meuble (2) d'un meuble (1) selon l'une des revendications précédentes, **caractérisé en ce que** le levier articulé (16) présente deux, trois ou plus, organes d'écartement (19, 31) qui sont réalisés à distance les uns des autres sur le levier articulé (16).

4. Levier articulé (16) pour un dispositif (9) destiné à déplacer une partie de meuble (3) montée sur un corps de meuble (2) d'un meuble (1) selon l'une des revendications précédentes, **caractérisé en ce que** le relief (22 - 24) de la première empreinte (29) et/ou le relief (35) de la deuxième empreinte (32) présente la surface d'appui.

5. Dispositif (9) pour déplacer une partie de meuble (3) montée sur un corps de meuble (2) d'un meuble (1), le dispositif (9) présentant des moyens de guidage (13), dans lequel, lorsque le dispositif (9) est monté sur le meuble (1), la partie de meuble (3) est apte à être déplacée avec les moyens de guidage (13) depuis une position de fermeture par rapport au corps de meuble (2) jusque dans une position d'ouverture par rapport au corps de meuble (2) et inversement, la partie de meuble (3) prenant dans la position de fermeture une position rapprochée d'un côté frontal (4b) du corps de meuble (2), un moyen de guidage (13) étant conçu sous la forme d'un premier levier articulé (16) et un autre moyen de guidage étant conçu sous la forme d'un deuxième levier articulé (18), le deuxième levier articulé (18) étant conçu en sandwich avec au moins deux bras de levier (17a, 17b), de sorte que le premier levier articulé (16) est monté de manière mobile entre les deux bras de levier (17a, 17b) du deuxième levier articulé (18), le premier et le deuxième levier articulé (16, 18) étant reliés de manière articulée l'un à l'autre par des moyens de liaison dans une zone de liaison (19),
**caractérisé en ce que**
le premier levier articulé (16) est conçu sous la forme d'un levier articulé selon l'une des revendications précédentes, et dans lequel les empreintes (29, 32) du premier levier articulé (16) sont agencées entre les bras de levier (17a, 17b) du deuxième levier articulé (18).

6. Dispositif (9) pour le déplacement d'une partie de meuble (3) montée sur un corps de meuble (2) d'un meuble (1) selon la revendication 5, **caractérisé en ce que** le dispositif (9) comprend un organe riveté (30), l'organe riveté (30) présentant une forme cylindrique qui possède dans une zone centrale (59) un diamètre plus grand que dans une zone d'une première extrémité de l'organe riveté (30) et que dans une zone d'une deuxième extrémité de l'organe riveté (30).

7. Dispositif (9) pour le déplacement d'une partie de meuble (3) montée sur un corps de meuble (2) d'un meuble (1) selon la revendication 6 précédente, **caractérisé en ce que** l'organe riveté (30) est conçu sous la forme d'un rivet plein.

8. Dispositif (9) de déplacement d'une partie de meuble (3) montée sur un corps de meuble (2) d'un meuble (1) selon les revendications 6 à 7 précédentes, **caractérisé en ce que** l'organe riveté (30) est présent de telle sorte que, lorsque l'organe riveté (30) est disposé sur l'ouverture (20) du premier levier articulé (16), l'organe riveté (30) traverse l'ouverture (20) et est disposé avec sa zone centrale (59) située dans la zone de l'ouverture (20), l'organe riveté (30) s'étendant avec la première extrémité (58) allant au-delà du premier côté (21, 28) du premier levier articulé (16) et avec la deuxième extrémité (60) allant au-delà du deuxième côté (33, 34) du premier levier articulé (16), la zone centrale (59) de l'organe riveté (30) étant plus longue le long d'un axe de cylindre de l'organe riveté (30) qu'une largeur du premier levier d'articulation (16), ladite largeur s'étendant de la surface restante (28) du premier côté (21) jusqu'à la surface restante (34) du deuxième côté (33) du premier levier d'articulation (16), de sorte qu'une face frontale (63, 64) de la zone centrale (59) forme un organe d'appui (65, 66) pour le deuxième levier d'articulation (18).

9. Dispositif (9) pour le déplacement d'une partie de meuble (3) reçue sur un corps de meuble (2) d'un meuble (1) selon les revendications 6 à 8 précédentes, **caractérisé en ce que** l'organe riveté (30) est présent de telle sorte que la zone centrale (59) de l'organe riveté (30) s'étend le long d'un axe de cylindre de l'organe riveté (30) à l'état d'agencement, depuis une surface d'appui (68) d'un relief de la première empreinte (28) jusqu'à une surface d'appui (67) d'un relief de la deuxième empreinte (32).

10. Meuble (1) comprenant un levier articulé (16) selon l'une des revendications 1 à 4 précédentes, ou dispositif (9) selon l'une des revendications 5 à 9 précédentes.
